# EUROPÄISCHE PATENTSCHRIFT

(11) **EP 1 660 359 B1**
(45) Veröffentlichungstag und Bekanntmachung des Hinweises auf die Patenterteilung: **13.12.2006**
(21) Anmeldenummer: 04735731.4
(22) Anmeldetag: 02.06.2004
(51) Int. Cl.: B60S 1/08, B60S 1/16

(54) **ANTRIEBSVORRICHTUNG FÜR SCHEIBENWISCHER MIT EINEM PARKSTELLUNGSSCHALTER**
DRIVE DEVICE FOR WINDOW WIPERS WITH A PARKING POSITION SWITCH
DISPOSITIF D'ENTRAINEMENT POUR ESSUIE-GLACE, COMPRENANT UN COMMUTATEUR DE POSITION DE STATIONNEMENT

(30) Priorität: 27.08.2003 DE 10339316
(43) Veröffentlichungstag der Anmeldung: 31.05.2006
(73) Patentinhaber: ROBERT BOSCH GMBH, 70442 Stuttgart (DE)
(72) Erfinder: HAWIGHORST, Achim, 77830 Buehlertal (DE); STUBNER, Armin, 77815 Buehl-Altschweier (DE)
(86) Internationale Anmeldenummer: PCT/DE2004/001121
(87) Internationale Veröffentlichungsnummer: WO 2005/025952

(56) Entgegenhaltungen:
- EP-A- 0 359 227
- WO-A-97/24245
- PATENT ABSTRACTS OF JAPAN vol. 015, no. 225 (M-1122), 10. Juni 1991 (1991-06-10) -& JP 03 067754 A (ASMO CO LTD), 22. März 1991 (1991-03-22)

## Beschreibung

Die Erfindung betrifft eine Antriebsvorrichtung für einen Scheibenwischer mit einem Abtriebszahnrad, einem Getriebedeckel, an den eine zum Abtriebszahnrad hin offene Hülse aus Kunststoff angeformt ist, und einem Parkstellungsschalter, bestehend aus ersten drehbar gelagerten Kontakten und damit in Gleitberührung stehenden zweiten fest am Getriebedeckel angeordneten Kontakten, wobei die drehbar gelagerten Kontakte über eine Mitnahmeeinrichtung mit dem Abtriebszahnrad verbunden sind.

Eine derartige Antriebsvorrichtung ist bereits aus der DE 195 48 824 A1 bekannt.

Eine weitere Antriebsvorrichtung nach dem Oberbegriff des unabhängigen Anspruchs 1, ist aus dem Dokument EP-A-0 359 227 bekannt.

Antriebsvorrichtungen für Scheibenwischer sind mit Schaltern versehen, die dafür sorgen, dass der Motor der Antriebsvorrichtung nach Öffnen des Hauptschalters durch den Fahrer noch so lange mit Strom versorgt wird, bis der Scheibenwischer wieder in seine Ausgangsposition gelangt ist, die auch als Parkstellung bezeichnet wird. Dementsprechend wird der Schalter Parkstellungsschalter genannt.

Herkömmlicherweise werden die Parkstellungsschalter realisiert durch eine Schaltscheibe, die drei konzentrische, abschnittsweise unterbrochene Kontaktbahnen aufweist, wobei auf jeder Bahn ein punktförmiges Kontaktelement (Kontaktfahne) schleift, das eine elektrisch leitende Verbindung zur Kontaktbahn herstellt. Häufig sind die Kontaktbahnen bzw. die Schaltscheibe fest auf dem Abtriebszahnrad der Abtriebswelle angeordnet oder damit verbunden, während die Kontaktfahnen gehäusefest, insbesondere am Getriebedeckel, ausgebildet sind.

Bei dieser Anordnung, bei der ein Element, typischerweise die mit dem Abtriebszahnrad rotierenden Kontaktbahnen, des Parkstellungsschalters fest mit der Abtriebswelle verbunden ist, tritt folgendes Problem auf:

Das Scheibenwischerblatt kann durch äußere Einflüsse, z. B. durch Schnee auf der Windschutzscheibe daran gehindert werden, in seine Parkstellung zu gelangen. Da aber die Abtriebswelle so lange vom Motor angetrieben wird, bis sie eine Winkellage eingenommen hat, die der Parkstellung des Wischblattes bei ungehinderter Bewegung entspricht, wird der Wischarm und das Wischblatt bogenförmig verspannt, indem sie sich am Hindernis abstützen. Sobald der Motor selbsttätig abschaltet, bewirkt der sich entspannende Wischer, dass die Abtriebswelle zurückgedreht wird. Dies hat zur Folge, dass der Parkstellungsschalter erneut geschlossen und der Motor mit Strom versorgt wird. Dies führt dazu, dass der Wischer wieder gegen das Hindernis gefahren und erneut eine mechanische Spannung aufgebaut wird. Dieser Vorgang wiederholt sich so lange, bis das Hindernis beseitigt ist. Ersichtlich wirken dabei erhebliche Belastungen auf das Getriebe, die dessen Lebensdauer herabsetzen.

Zur Behebung dieses Problems ist die gattungsgemäße Antriebsvorrichtung mit einer Schneelastsicherung ausgestattet, das heißt, der Parkstellungsschalter ist durch eine Mitnahmeeinrichtung ergänzt, so dass die drehbar gelagerten Kontakte nicht mehr fest, sondern über eine Kupplung mit dem Abtriebszahnrad verbunden sind. Diese Kupplung ist derart ausgebildet, dass die Abtriebswelle im normalen Betrieb, bei dem der Wischer pendelnd angetrieben wird, die Schaltscheibe mitnimmt, so dass der Parkstellungsschalter wie ein Parkstellungsschalter arbeitet, dessen Schaltscheibe fest mit der Abtriebswelle verbunden ist. Wenn aber der oben erläuterte Fall eintritt, bei dem die Abtriebswelle, beispielsweise auch durch Windkraft, gegen ihre eigentliche Drehrichtung zurückgestellt wird, wird die Schaltscheibe nicht mitgenommen, so dass der Parkstellungsschalter, der den Motor andernfalls erneut mit Strom versorgen würde, nicht geschlossen wird.

In Verbindung mit einer derartigen Mitnahmeeinrichtung wird in der eingangs genannten Offenlegungsschrift weiterhin, um ein flach bauendes Gehäuse zu erhalten, vorgeschlagen, dass das drehbar gelagerte Kontaktelement auf einer Kunststoff-Lagerhülse, die am Getriebedeckel ausgebildet ist, gelagert ist, und dass sich die Abtriebswelle in die Hülse hinein erstreckt.

Allein vom Mitnehmerprinzip her gesehen, könnten demnach bei der gattungsgemäßen Vorrichtung, die Ausführungen mit drehbaren Kontaktbahnen bevorzugt, auch die Kontaktfahnen drehbar gelagert sein. Allen bekannten Antriebsvorrichtungen gemeinsam ist jedoch, dass in jedem Fall eine erste drehbar gelagerte Ebene bzw. Kontaktscheibe resultiert, die in Gleitberührung zu einer parallelen zweiten Kontaktebene angeordnet ist, die typischerweise durch einen flachen Teil der Innenseite des Getriebedeckels gebildet ist. Diese herkömmliche, parallele Konfiguration ist hinsichtlich des konstruktiven Aufbaus sehr einschränkend und auch in anderer Hinsicht nicht völlig zufriedenstellend.

Der Erfindung liegt daher die Aufgabe zugrunde, eine verbesserte Antriebsvorrichtung der eingangs genannten Art zu schaffen. Diese Aufgabe wird erfindungsgemäß durch eine Antriebsvorrichtung gemäß Anspruch 1 gelöst. Weiterbildungen und bevorzugte Maßnahmen ergeben sich aus den Unteransprüchen.

Bei der bekannten Antriebsvorrichtung der eingangs genannten Art mit einem Parkstellungsschalter ist demgemäß zunächst vorgesehen, dass die Hülse als Kontakthülse ausgebildet ist, die der Kontaktierung der drehbar gelagerten Kontakte dient, wobei an der Kontakthülse Kontaktbahnen vorgesehen sind. Erfindungsgemäß ist mindestens eine der Kontaktbahnen an der Innenfläche der Kontakthülse angeordnet. Weiter weißt die Mitnahmeeinrichtung eine Mitnehmerscheibe mit einem zentral aufgesetzten Zylinderteil und Kontaktfahnen auf. Erfindungsgemäß ist mindestens eine der Kontaktfahnen an der Oberfläche des Zylinderteils ausgebildet. Dadurch, dass sich der Zylinderteil derart in die Kontakthülse hinein erstreckt, dass die Kontaktfahnen der sich mit dem Abtriebszahnrad mitdrehenden Mitnehmerscheibe gleitend an den Kontaktbahnen der Kontakthülse angreifen, ist ein Parkstellungsschalter mit Schneelastsicherung realisiert, der platzsparend, kontaktsicher und konstruktiv variabel ist. Insbesondere ist es erfindungsgemäß möglich, das aus den Kontaktbahnen und den Kontaktfahnen bestehende Kontaktsystem des Parkstellungsschalters im Wesentlichen im Getriebedeckel zu integrieren.

Eine besonders vorteilhafte Ausgestaltung dieser Antriebsvorrichtung besteht darin, dass an der Kontakthülse drei Kontaktbahnen und an der Mitnehmerscheibe zwei elektrisch miteinander verbundene Kontaktfahnen vorgesehen sind, die derart ausgebildet und angeordnet sind, dass, bei sich drehender Mitnehmerscheibe, eine erste Kontaktfahne ständig auf einer ersten Kontaktbahn und eine zweite Kontaktfahne abwechselnd auf einer zweiten und dritten Kontaktbahn der Kontakthülse schleift. Dieses vereinfachte Schleifersystem mit nur noch zwei Kontaktfahnen ist kostengünstig und wenig störanfällig.

Ein derartiges Schleifersystem kann im Zusammenhang mit der der Erfindung zugrunde liegenden Hülse-/Zylinder-Geometrie in einfacher Weise dadurch realisiert werden, dass die zweite und dritte Kontaktbahn als nur durch gegenseitige Isolierungen unterbrochene Segmente einer ringförmigen Umlaufbahn ausgebildet sind, entlang derer die zweite Kontaktfahne schleifend umläuft und abwechselnd die zweite und dritte Kontaktbahn kontaktiert.

Es ist darüber hinaus vorteilhaft, wenn alle drei Kontaktbahnen an der Innenfläche der Kontakthülse angeordnet sind und wenn dementsprechend beide Kontaktfahnen an der Oberfläche des Zylinderteils ausgebildet sind.

Eine zweckmäßige Verwirklichung einer derartigen "Innenkontaktierung" besteht darin, dass die zweite und dritte Kontaktbahn an einer inneren Mantelfläche der Kontakthülse, um deren Achse umlaufend, als nur durch gegenseitige Isolierungen unterbrochene ringförmige Umlaufbahn ausgebildet sind, und dass die der zweiten und dritten Kontaktbahn zugeordnete zweite Kontaktfahne an der Mantelfläche des Zylinderteils ausgebildet und derart angeordnet ist, dass sie bei sich drehender Mitnehmerscheibe entlang der Umlaufbahn umläuft und abwechselnd auf der zweiten und dritten Kontaktbahn schleift.

Dabei, und bei anderen Ausführungen, ist es hinsichtlich einer fertigungsmäßig einfach realisierbaren Kontaktierbarkeit vorteilhaft, dass die erste Kontaktbahn an der inneren Stirnfläche der Kontakthülse und die zugehörige erste Kontaktfahne an der Deckfläche des Zylinderteils ausgebildet sind.

Ebenso gut besteht jedoch auch die Möglichkeit, dass die erste Kontaktbahn an einer inneren Mantelfläche der Kontakthülse, ringförmig geschlossen um deren Achse, ausgebildet ist, und dass auch die zweite und dritte Kontaktbahn an einer inneren Mantelfläche der Kontakthülse, axial versetzt zur ersten Kontaktbahn um die Achse der Kontakthülse umlaufend, als nur durch gegenseitige Isolierungen unterbrochene ringförmige Umlaufbahn ausgebildet sind. Dementsprechend ist die der ersten Kontaktbahn zugeordnete erste Kontaktfahne an der Mantelfläche des Zylinderteils ausgebildet und derart angeordnet, dass sie bei sich drehender Mitnehmerscheibe entlang der ringförmig geschlossenen ersten Kontaktbahn umläuft und dabei ständig auf der ersten Kontaktbahn schleift. Des Weiteren ist dabei vorgesehen, dass die der zweiten und dritten Kontaktbahn zugeordnete zweite Kontaktfahne an der Mantelfläche des Zylinderteils ausgebildet und derart angeordnet ist, dass sie bei sich drehender Mitnehmerscheibe entlang der Umlaufbahn umläuft und abwechselnd auf der zweiten und dritten Kontaktbahn schleift.

Die Erfindung ist jedoch nicht auf das Prinzip einer "Innenkontaktierung" beschränkt. Alternativ dazu kann die zweite und dritte Kontaktbahn als ringförmig auf dem offenen Rand der Kontakthülse angeordnete, nur durch gegenseitige Isolierungen unterbrochene, Umlaufbahn ausgebildet sein. Die Kontaktbahnen können also auch außerhalb des inneren Raums der Kontakthülse ausgebildet sein. Die der zweiten und dritten Kontaktbahn zugehörige zweite Kontaktfahne erstreckt sich in diesem Fall zweckmäßig von der Oberfläche der Mitnehmerscheibe aus in axialer Richtung so weit zum Randbereich der Kontakthülse hin, dass sie bei sich drehender Mitnehmerscheibe entlang der Umlaufbahn umläuft und abwechselnd auf der zweiten und dritten Kontaktbahn schleift.

Weitere Vorteile und Ausgestaltungen der Erfindung sind in der nachfolgenden Beschreibung der in den Figuren der Zeichnung dargestellten Ausführungsbeispiele näher erläutert. Es zeigt:
Figur 1 ein Prinzipschaltbild des Parkstellungsschalters der erfindungsgemäßen Antriebsvorrichtung,
Figur 2 einen Querschnitt durch das Getriebe, den Parkstellungsschalter und die Mitnahmeeinrichtung der Antriebsvorrichtung,
Figur 3 in Explosionsdarstellung ein Kontaktsystem mit Kontakthülse und Mitnehmerscheibe für den Parkstellungsschalter einer erfindungsgemäßen Antriebsvorrichtung,
Figur 4 in schematisierter Querschnittsdarstellung wesentliche Teile des Kontaktsystems gemäß Figur 3,
Figur 5 das Kontaktsystem gemäß Figur 4 in Draufsicht,
Figur 6 in Explosionsdarstellung eine andere Ausführungsform der Erfindung mit einem Kontaktsystem mit Kontakthülse und Mitnehmerscheibe,
Figur 7 in schematisierter Querschnittsdarstellung wesentliche Teile des Kontaktsystems gemäß Figur 6,
Figur 8 das Kontaktsystem gemäß Figur 7 in Draufsicht,
Figur 9 in schematisierter Querschnittsdarstellung eine Variante des Kontaktsystems gemäß Figur 7 und 8,
Figur 10 das Kontaktsystem gemäß Figur 9 in Draufsicht,
Figur 11 in schematisierter Querschnittsdarstellung eine weitere Ausführungsform der Erfindung mit einem Kontaktsystem mit Kontakthülse und Mitnehmerscheibe,
Figur 12 das Kontaktsystem gemäß Figur 11 in Draufsicht.

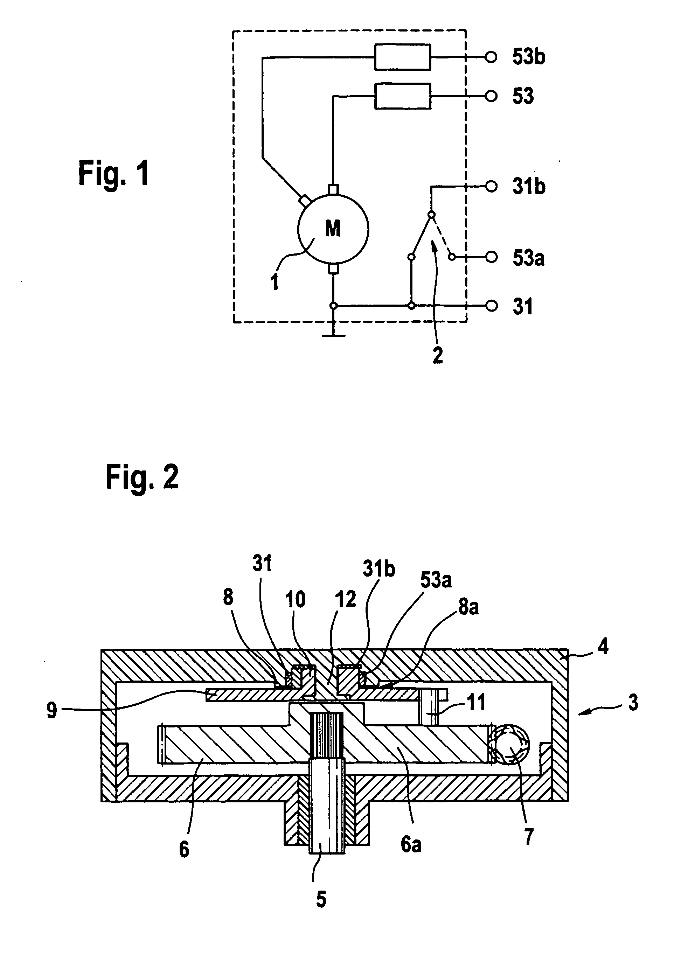

Figur 1 zeigt in einem Prinzipschaltbild die elektrischen Funktionen eines Parkstellungsschalters eines Scheibenwischerantriebs zur Reinigung einer Windschutzscheibe eines Kraftfahrzeuges. Erkennbar ist ein nur schematisch angedeuteter elektrischer Antriebsmotor 1, der drei elektrische Anschlüsse aufweist. Ein Masseanschluss führt zu einer Klemme 31 und damit zu einem Minuspol einer hier nicht dargestellten Fahrzeugbatterie bzw. zu einer Fahrzeugmasse. Eine Klemme 53 führt über einen nicht dargestellten Lenkstockschalter zu einem Pluspol der Fahrzeugbatterie, wenn der Antriebsmotor 1 in einer ersten, das heißt langsameren Stufe laufen soll. Soll der Antriebsmotor 1 in einer schnelleren zweiten Stufe betrieben werden, so wird zusätzlich eine Nebenschlusswicklung des Antriebsmotors 1, wie dargestellt, mit einer Klemme 53b verbunden.

Der in Figur 1 außerdem dargestellte Parkstellungsschalter soll für ein sicheres und exaktes Absetzen des Wischers in der Parklage sorgen. Dieser Schalter ist im Wesentlichen realisiert durch ein Kontaktsystem mit drei gehäusefesten Kontaktbahnen 31b, 53a und 31, die an den schalterseitigen Kontaktpunkten der entsprechenden Klemmen gebildet und deshalb zur besseren Verständlichkeit im Folgenden mit gleichen Bezugszeichen wie die korrespondierenden Klemmen versehen sind, sowie mit zwei (in den folgenden Figuren näher dargestellten) Kontaktfahnen, die mit dem Abtriebszahnrad mitrotieren und die den Kontaktpunkten der Schaltbrücke 2 in Figur 1 entsprechen.

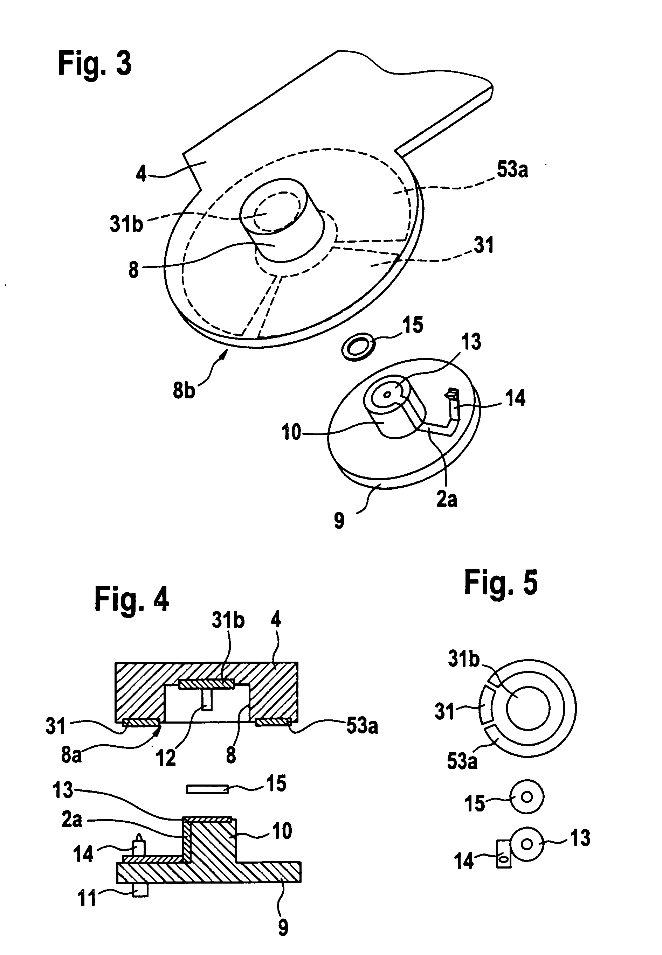

Die in Figur 1 gezeigte Stellung der Schaltbrücke 2 entspricht der endgültig erreichten Parklage. Der zum Erreichen dieser Parklage zuvor stattfindende Parkstellungslauf beginnt damit, dass der Lenkstockschalter in eine Null-Stellung gesetzt wird (für weitere Schaltungsdetails vgl. beispielsweise DE 198 37 980 A1). Da sich die Wischer noch nicht in ihrer Endstellung befinden, muss der Antriebsmotor 1 so lange weiterlaufen, bis die Parklage der Wischer erreicht ist. Zu diesem Zweck ist der Antriebsmotor 1 mit dem aus Kontaktbahnen und Kontaktfahnen bestehenden Kontaktsystem versehen, das in allen Wischerstellungen, außer in der Endstellung, einen Stromfluss von einer Klemme 31b zu einer Klemme 53a ermöglicht und damit über eine Kontaktbrücke im Lenkstockschalter - der weiterhin in Null-Stellung ist - eine elektrische Verbindung vom Pluspol der Fahrzeugbatterie zum Anschluss 53 des Antriebsmotors 1. Die Schaltbrücke 2 verbindet also zunächst Klemme 31b mit der Klemme 53a. Dadurch läuft der Antriebsmotor 1 trotz der erfolgten Handabschaltung weiter und der Wischer nähert sich an seine Parklage an. Beim Einlauf in die Parkstellung wird der Stromfluss zwischen diesen beiden Klemmen bereits unterbrochen (die zweite Kontaktfahne schleift nicht mehr auf der Kontaktbahn 53a, siehe unten), jedoch läuft der Antriebsmotor 1 durch seine Trägheit noch weiter. Dadurch läuft auch die mitrotierende Kontaktfahne soweit weiter, bis über die Schaltbrücke 2 eine Verbindung zwischen den Klemmen 31b und 31 hergestellt wird. Der damit kurzgeschlossene Antriebsmotor 1 wird somit aktiv (elektromagnetisch) gebremst und kommt, wie erwünscht, in der endgültigen Parklage zur Ruhe. Der diesen Vorgängen zugrunde liegende Bewegungsablauf des schleifenden Kontaktsystems wird in den Figuren 3 bis 12 noch näher dargestellt.

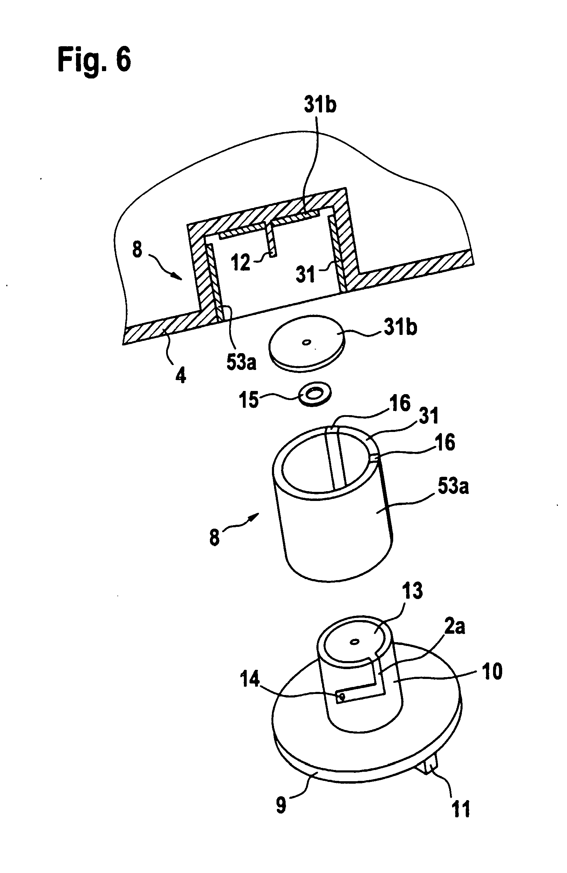

Figur 2 zeigt den schematischen Aufbau einer Ausführung des Parkstellungsschalters, die im Wesentlichen der in den Figuren 6 bis 8 gezeigten Ausführung entspricht. Dargestellt ist ein topfförmiges Getriebegehäuse 3, dessen offene Seite durch einen Getriebedeckel 4 verschlossen ist. Durch den Boden des Gehäuses 3 erstreckt sich eine Abtriebswelle 5, auf deren Ende, das in das Gehäuse 1 hineinragt, ein Abtriebszahnrad 6 aus Kunststoff befestigt ist. Das Zahnrad 6 weist dabei einen kappenartigen Abschnitt 6a auf, der sich über die Stirnseite der Welle 5 erstreckt, die in das Gehäuse 3 hineinragt. Das Abtriebszahnrad 6 entspricht in seiner radialen Ausdehnung in etwa dem Innendurchmesser des Gehäuses 3. In der (nicht dargestellten) Außenverzahnung des Zahnrades 6 kämmt eine Schnecke 7, die in unmittelbarer Verlängerung der Ankerwelle des hier ebenfalls nicht dargestellten Antriebsmotors 1 ausgebildet ist.

Der Getriebedeckel 4 kann aus Kunststoff bestehen, an den eine sich in axialer Richtung in das Innere des Gehäuses 3 erstreckende Kontakthülse 8 einstückig angeformt ist. Ebenso kann der Getriebedeckel 4 jedoch aus einer metallischen Grundplatte und einer Kunststoffschicht bestehen, die sich im Wesentlichen an der Außenseite der Grundplatte erstreckt und mit der die Kontakthülse 8 einstückig ausgebildet ist. Abweichend von der in Figur 2 gezeigten Ausführung kann die Kontakthülse 8 im Getriebedeckel 4 auch in der Weise ausgebildet sein, dass sie sich zur Außenseite des Deckels 4 hin kappenartig aufwölbt, während der offene Rand 8a der Hülse 8 mehr oder weniger plan mit der Innenseite des Getriebedeckels 4 fluchtet.

In den in der Kontakthülse 8 gebildeten Raum ragt ein Zylinderteil 10 hinein, das zentral auf eine Mitnehmerscheibe 9 aufgesetzt ist. Die Mitnehmerscheibe 9 ist in an sich bekannter Weise, beispielsweise über eine Mitnehmernase 11 am Abtriebszahnrad 6 und eine entsprechende (nicht dargestellte) Nut an der Unterseite der Mitnehmerscheibe 9, oder umgekehrt, so an das Abtriebszahnrad 6 gekuppelt, dass bei einer Drehung der Abtriebswelle 5 in die eine Richtung die Mitnehmerscheibe 9 - und damit die daran fest angeordneten, also relativ zur Kontakthülse 8 drehbar gelagerten Kontakte - mitgenommen und bei einer Drehung der Welle 5 in die andere Richtung die Mitnehmerscheibe 9 nicht mitgenommen wird.

Im Bereich der Kontakthülse 8 sind Kontaktbahnen 31b, 53a und 31 ausgebildet, die bei sich drehender Mitnehmerscheibe 9 in weiter unten noch näher zu beschreibender Weise in Gleitberührung mit den in Figur 2 nicht erkennbaren drehbar gelagerten Kontakten, den Kontaktfahnen, stehen. Zur drehbaren Lagerung des Zylinderteils 10 bzw. der gesamten Mitnehmerscheibe 9 kann, wie dargestellt, eine axiale Bohrung in der Mitnehmerscheibe 9 und eine vom Getriebedeckel 4 aus durch diese Bohrung durchgreifende Halterung 12 vorgesehen sein.

Figur 3 zeigt eine der besseren Übersicht halber auseinandergezogene Darstellung der Kontakthülse 8 und der Mitnehmerscheibe 9. Erkennbar ist eine in der Kontur des Getriebedeckels 4 aufgewölbte Kontakthülse 8, an deren innerer Stirnfläche eine erste Kontaktbahn 31b angebracht ist. Um den offenen Rand der Kontakthülse 8 herum, also an der vom Betrachter ab- bzw. der Kontaktscheibe 9 zugewandten Seite des Deckels 4, ist ein planer Bereich 8b hervorgehoben, in welchem eine zweite Kontaktbahn 53a in Form eines Kreisbahnsegmentes angebracht ist. In die Ausnehmung zwischen den Enden des Kreisbahnsegmentes 53a, also ebenfalls in Form eines Kreisbahnsegmentes, ist, isoliert gegenüber der an beiden Enden angrenzenden zweiten Kontaktbahn 53a, eine dritte Kontaktbahn 31 eingefügt. Insgesamt ist durch die einander zu einem Ring ergänzenden Kreisbahnsegmente eine abwechselnd aus der zweiten und dritten Kontaktbahn 53a bzw. 31 bestehende Umlaufbahn im Bereich des offenen Randes der Kontakthülse 8 gebildet.

Auf der Deckfläche des Zylinderteils 10 der in Figur 3 gezeigten Mitnehmerscheibe 9 ist eine flächige erste Kontaktfahne 13 angebracht, die über eine Verbindung 2a mit einer zweiten Kontaktfahne 14 elektrisch verbunden ist. Die zweite Kontaktfahne 14 steht von der Mitnehmerscheibe 9 axial etwas in Richtung zum planaren Bereich 8b am Getriebedeckel 4 ab, so dass sie in montiertem Zustand die dortige Umlaufbahn 53a, 31 berühren kann. Die Kontaktfahnen 13 und 14 bzw. die Verbindung 2a können beispielsweise aus 0,5 mm dickem Bandstahl gefertigt sein, wobei die in gewünschtem Maße federnd ausführbare Kontaktfahne 14, wie dargestellt, in ihrem Endbereich mit Vorteil abriebfest gekröpft ausgeführt sein kann. Ferner dargestellt in Figur 3 ist eine Federscheibe 15, die, bei in die Kontakthülse 8 eingeschobenem Zylinderteil 10, eine toleranzsichere elektrische Verbindung zwischen der ersten Kontaktbahn 31b und der ersten Kontaktfahne 13 herstellt.

Die Funktion des in Figur 3 dargestellten Kontaktsystems als Parkstellungsschalter ergibt sich am leichtesten in der Zusammenschau mit den Figuren 4 und 5, die das gleiche Kontaktsystem in schematisierter Form und aus anderer Perspektive darstellen. Im zusammengebauten Zustand und bei sich in normaler Richtung drehendem Abtriebszahnrad 6 schleift die erste Kontaktfahne 13 vermittels der zwischenliegenden Federscheibe 15 ständig auf der ersten Kontaktbahn 31b der Kontakthülse 8, während die zweite Kontaktfahne 14 entlang der Umlaufbahn um den Rand 8a der Kontakthülse 8 herum umläuft und dabei abwechselnd auf der zweiten und dritten Kontaktbahn 53a bzw. 31 schleift. Dementsprechend läuft der Antriebsmotor im Parkstellungslauf - also in Null-Stellung des Lenkstockschalters - zunächst weiter, solange die zweite Kontaktfahne 14 auf der zweiten Kontaktbahn 53a schleift. Erreicht der angetriebene Wischer die Nähe der Parklage, so erreicht, damit korrespondierend, die zweite Kontaktfahne 14 die Ausnehmung in der zweiten Kontaktbahn 53a, der Motor wird abgeschaltet, die zweite Kontaktfahne 14 läuft, der Trägheit des Antriebssystems entsprechend, noch etwas weiter und schleift über die dritte Kontaktbahn 31, wodurch der Motor, wie weiter oben beschrieben, kurzgeschlossen und der Wischer, bzw., vermittels der Mitnehmerscheibe 9 auch die zweite Kontaktfahne 14, abgebremst werden. Dem Anhalten des Wischers in der Parklage entspricht die Haltestellung der zweiten Kontaktfahne 14 auf der dritten Kontaktbahn 31.

Die Kontaktbahnen 31b, 53a und 31 können beispielsweise als netzartige Kontaktstrukturen bzw. als Stanzgitter im Bereich der Kontakthülse 8 aufgebracht oder als plattenförmige Einlegestrukturen im Getriebedeckel 4 umspritzt werden. Auch die erforderlichen elektrischen Anschlüsse bzw. Leiterbahnen können in ähnlicher Weise realisiert werden.

Die Figuren 6 bis 12 zeigen verschiedene Ausführungsbeispiele, bei denen aber jeweils alle drei Kontaktbahnen 31b, 53a und 31 an der Innenfläche der Kontakthülse 8 angeordnet sind und dementsprechend auch beide Kontaktfahnen 13 und 14 an der Oberfläche des Zylinderteils 10 ausgebildet sind.

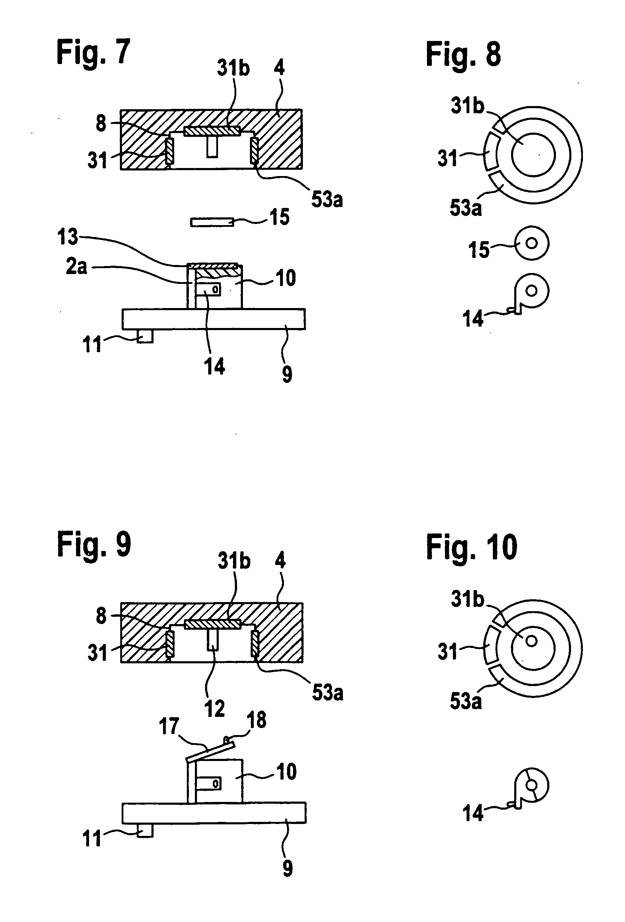

Dies kann beispielsweise mit der in den Figuren 6 bis 8 gezeigten Anordnung realisiert werden. Die erste Kontaktfahne 13 steht auch bei dieser Ausführungsform über eine Federscheibe 15 in ständigem schleifenden Kontakt mit der an der Stirnfläche der Kontakthülse 8 ausgebildeten ersten Kontaktbahn 31b. Im oberen Teil von Figur 6 ist zunächst zur Orientierung, bzw. als Ergänzung zur unterhalb liegenden eigentlichen Explosionsdarstellung, die Kontakthülse 8 mit den drei Kontaktfahnen 31b, 53a und 31 gezeigt. Unterhalb der Federscheibe 15 ist die buchsenartige Kontaktstruktur der beiden Segmente 53a und 31 dargestellt, die durch die Isolierungen 16 getrennt sind, insgesamt jedoch eine ringförmige Umlaufbahn bilden. An der Mantelfläche des zentral auf der Mitnehmerscheibe 9 aufsitzenden Zylinderteils 10 ist die über eine Verbindung 2a mit der ersten Kontaktfahne 13 verbundene zweite Kontaktfahne 14 erkennbar, die, bei sich drehender Mitnehmerscheibe 9, entlang der Umlaufbahn umläuft und abwechselnd auf der zweiten und dritten Kontaktbahn 53a bzw. 31 schleift. In den Figuren 7 und 8 sind die gleichen Verhältnisse nochmals in schematisierter, übersichtlicher Weise, bzw. aus anderer Perspektive, dargestellt.

Die Figuren 9 und 10 zeigen eine Variante der Ausführung gemäß Figur 6 bis 8, bei der die erste Kontaktfahne 13 bzw. die Federscheibe 15 durch ein federndes Kontaktelement 17 mit einem punktförmigen Ende 18 ersetzt sind, das unmittelbar die zugehörige Kontaktbahn 31b in der Kontakthülse 8 kontaktiert. Diese Maßnahme als solche ist jedoch auch bei anderen Ausführungen einsetzbar.

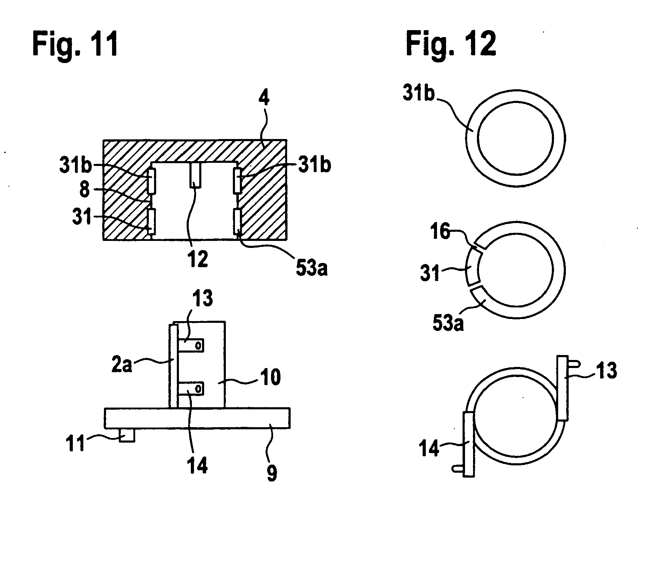

Figur 11 und 12 zeigen eine Ausführungsfom, bei der die erste Kontaktbahn 31b nicht wie in den bisherigen Ausführungsbeispielen an der inneren Stirnfläche, sondern ringförmig ohne Unterbrechung an einer Mantelfläche der Kontakthülse 8 ausgebildet ist. Die zweite und dritte Kontaktbahn 53a bzw. 31 sind ebenfalls an der inneren Mantelfläche der Kontakthülse 8, jedoch axial versetzt zur ersten Kontaktbahn 31b, als Umlaufbahn ausgebildet. Dementsprechend laufen die erste und zweite Kontaktfahne 13 bzw. 14 auf ihren parallel versetzten Umlaufbahnen um, wobei die erste Kontaktbahn 31b ständig und die zweite und dritte Kontaktbahn 53a bzw. 31 abwechselnd kontaktiert werden.

Neben den dargestellten sind weitere Ausführungen möglich. Beispielsweise könnte die Ausführungsform gemäß den Figuren 3 bis 5 dahingehend abgeändert werden, dass eine ringförmige Umlaufbahn an der inneren Mantelfläche der Kontakthülse 8 anstatt der an der inneren Stirnfläche angeordneten ebenen Kontaktbahn 31b vorgesehen wird.

## Patentansprüche

1. Antriebsvorrichtung für einen Scheibenwischer mit einem Abtriebszahnrad (6), einem Getriebedeckel (4), an den eine zum Abtriebszahnrad (6) hin offene Hülse aus Kunststoff angeformt ist, und einem Parkstellungsschalter, bestehend aus ersten drehbar gelagerten Kontakten und damit in Gleitberührung stehenden zweiten fest am Getriebedeckel (4) angeordneten Kontakten, wobei die drehbar gelagerten Kontakte über eine Mitnahmeeinrichtung mit dem Abtriebszahnrad (6) verbunden sind, wobei
- die Hülse als Kontakthülse (8) ausgebildet ist, die der Kontaktierung der drehbar gelagerten Kontakte dient, und an der Kontakthülse (8) Kontaktbahnen (31b, 53a, 31) vorgesehen sind und
- die Mitnahmeeinrichtung eine Mitnehmerscheibe (9) mit einem zentral aufgesetzten Zylinderteil (10) und Kontaktfahnen (13, 14) umfasst,
- und der Zylinderteil (10) sich derart in die Kontakthülse (8) hinein erstreckt, dass die Kontaktfahnen (13, 14) der sich mit dem Abtriebszahnrad (6) mitdrehenden Mitnehmerscheibe (9) gleitend an den Kontaktbahnen (31b, 53a, 31) der Kontakthülse angreifen,
**dadurch gekennzeichnet, dass** mindestens eine der Kontaktbahnen (31b, 53a, 31) an der Innenfläche der Kontakthülse (8) angeordnet ist, und mindestens eine der Kontaktfahnen (13, 14) an der Oberfläche des Zylinderteils (10) ausgebildet ist.

2. Antriebsvorrichtung nach Anspruch 1,
**dadurch gekennzeichnet, dass** an der Kontakthülse (8) drei Kontaktbahnen (31b, 53a, 31) und an der Mitnehmerscheibe (9) zwei elektrisch miteinander verbundene Kontaktfahnen (13, 14) vorgesehen sind, die derart ausgebildet und angeordnet sind, dass, bei sich drehender Mitnehmerscheibe (9), eine erste Kontaktfahne (13) ständig auf einer ersten Kontaktbahn (31b) und eine zweite Kontaktfahne (14) abwechselnd auf einer zweiten und dritten Kontaktbahn (53a, 31) der Kontakthülse (8) schleift.

3. Antriebsvorrichtung nach Anspruch 2,
**dadurch gekennzeichnet, dass** die zweite und dritte Kontaktbahn (53a, 31) als nur durch gegenseitige Isolierungen (16) unterbrochene Segmente einer ringförmigen Umlaufbahn ausgebildet sind, entlang derer die zweite Kontaktfahne (14) schleifend umläuft und abwechselnd die zweite und dritte Kontaktbahn (53a, 31) kontaktiert.

4. Antriebsvorrichtung nach Anspruch 2 oder 3,
**dadurch gekennzeichnet, dass** alle drei Kontaktbahnen (31b, 53a, 31) an der Innenfläche der Kontakthülse (8) angeordnet sind und dass beide Kontaktfahnen (13, 14) an der Oberfläche des Zylinderteils (10) ausgebildet sind.

5. Antriebsvorrichtung nach Anspruch 4, **dadurch gekennzeichnet,**
- **dass** die zweite und dritte Kontaktbahn (53a, 31) an einer inneren Mantelfläche der Kontakthülse (8), um deren Achse umlaufend, als nur durch gegenseitige Isolierungen (16) unterbrochene ringförmige Umlaufbahn ausgebildet sind,
- und **dass** die der zweiten und dritten Kontaktbahn (53a, 31) zugeordnete zweite Kontaktfahne (14) an der Mantelfläche des Zylinderteils (10) ausgebildet und derart angeordnet ist, dass sie bei sich drehender Mitnehmerscheibe (9) entlang der Umlaufbahn umläuft und abwechselnd auf der zweiten und dritten Kontaktbahn (53a, 31) schleift.

6. Antriebsvorrichtung nach Anspruch 4, **dadurch gekennzeichnet,**
- **dass** die erste Kontaktbahn (31b) an einer inneren Mantelfläche der Kontakthülse (8), ringförmig geschlossen um deren Achse, ausgebildet ist,
- **dass** die zweite und dritte Kontaktbahn (53a, 31) an einer inneren Mantelfläche der Kontakthülse (8), axial versetzt zur ersten Kontaktbahn (31b) um die Achse der Kontakthülse (8) umlaufend, als nur durch gegenseitige Isolierungen (16) unterbrochene ringförmige Umlaufbahn ausgebildet sind,
- **dass** die der ersten Kontaktbahn (31b) zugeordnete erste Kontaktfahne (13) an der Mantelfläche des Zylinderteils (10) ausgebildet und derart angeordnet ist, dass sie bei sich drehender Mitnehmerscheibe (9) entlang der ringförmig geschlossenen ersten Kontaktbahn (31b) umläuft und dabei ständig auf der ersten Kontaktbahn (31b) schleift,
- und **dass** die der zweiten und dritten Kontaktbahn (53a, 31) zugeordnete zweite Kontaktfahne (14) an der Mantelfläche des Zylinderteils (10) ausgebildet und derart angeordnet ist, dass sie bei sich drehender Mitnehmerscheibe (9) entlang der Umlaufbahn umläuft und abwechselnd auf der zweiten und dritten Kontaktbahn (53a, 31) schleift.

7. Antriebsvorrichtung nach Anspruch 3, **dadurch gekennzeichnet,**
- **dass** die zweite und dritte Kontaktbahn (53a, 31) als ringförmig auf dem offenen Rand (8a) der Kontakthülse (8) angeordnete, nur durch gegenseitige Isolierungen (16) unterbrochene, Umlaufbahn ausgebildet sind,
- und **dass** die der zweiten und dritten Kontaktbahn (53a, 31) zugehörige zweite Kontaktfahne (14) sich von der Oberfläche der Mitnehmerscheibe (9) aus in axialer Richtung so weit zum Randbereich (8b) der Kontakthülse (8) hin erstreckt, dass sie bei sich drehender Mitnehmerscheibe (9) entlang der Umlaufbahn umläuft und abwechselnd auf der zweiten und dritten Kontaktbahn (53a, 31) schleift.

8. Antriebsvorrichtung nach einem der Ansprüche 2 bis 5 oder nach Anspruch 7,
**dadurch gekennzeichnet, dass** die erste Kontaktbahn (31b) an der inneren Stirnfläche der Kontakthülse (8) und die zugehörige erste Kontaktfahne (13) an der Deckfläche des Zylinderteils (10) ausgebildet sind.

9. Antriebsvorrichtung nach Anspruch 8,
**dadurch gekennzeichnet**, das die erste Kontaktfahne (13) flächig auf der Deckfläche des Zylinderteils (10) ausgebildet ist und mittels einer zwischenliegenden, flächigen Kontaktfeder (15) die erste Kontaktbahn (31b) kontaktiert.

10. Antriebsvorrichtung nach einem der Ansprüche 1 bis 8,
**dadurch gekennzeichnet, dass** die erste und/oder zweite Kontaktfahne (13, 14) ein federndes Kontaktelement (17) mit einem punktförmigen Ende (18) umfasst, das unmittelbar die zugehörige Kontaktbahn (31b, 53a, 31) kontaktiert.

## Claims

1. Drive apparatus for a windscreen wiper, having an output gearwheel (6), a gear-mechanism cover (4) on which a plastic sleeve which is open towards the output gearwheel (6) is integrally formed, and a parking position switch, comprising first contacts which are mounted such that they can rotate and second contacts which are in sliding contact with the said first contacts and are arranged on the gear-mechanism cover (4) in a fixed manner, with the contacts which are mounted such that they can rotate being connected to the output gearwheel (6) by means of a driver device, with
- the sleeve being in the form of a contact sleeve (8) which is used to make contact with the contacts which are mounted such that they can rotate, and contact tracks (31b, 53a, 31) being provided on the contact sleeve (8), and
- the driver device comprising a driver disc (9) with a cylinder part (10), which is positioned centrally, and contact lugs (13, 14),
- and the cylinder part (10) extending into the contact sleeve (8) in such a way that the contact lugs (13, 14) of the driver disc (9) which rotates with the output gearwheel (6) engage on the contact tracks (31b, 53a, 31) of the contact sleeve in a sliding manner,
**characterized in that** at least one of the contact tracks (31b, 53a, 31) is arranged on the inner surface of the contact sleeve (8), and at least one of the contact lugs (13, 14) is formed on the surface of the cylinder part (10).

2. Drive apparatus according to Claim 1,
**characterized in that** three contact tracks (31b, 53a, 31) are provided on the contact sleeve (8) and two contact lugs (13, 14) which are electrically connected to one another are provided on the driver disc (9), the said contact lugs being formed and arranged in such a way that, when the driver disc (9) is rotating, a first contact lug (13) continuously wipes a first contact track (31b) and a second contact lug (14) alternately wipes a second and a third contact track (53a, 31) of the contact sleeve (8).

3. Drive apparatus according to Claim 2,
**characterized in that** the second and the third contact track (53a, 31) are in the form of segments of an annular circulatory track which are interrupted only by mutual isolation means (16), and the second contact lug (14) runs along the circulatory track in a wiping manner and alternately makes contact with the second and the third contact track (53a, 31).

4. Drive apparatus according to Claim 2 or 3,
**characterized in that** all three contact tracks (31b, 53a, 31) are arranged on the inner surface of the contact sleeve (8), and **in that** the two contact lugs (13, 14) are formed on the surface of the cylinder part (10).

5. Drive apparatus according to Claim 4,
**characterized**
- **in that** the second and the third contact track (53a, 31) are formed on an inner casing surface of the contact sleeve (8), in a manner running around its axis, in the form of an annular circulatory track which is interrupted only by mutual isolation means (16),
- and **in that** the second contact lug (14), which is assigned to the second and the third contact track (53a, 31), is formed on the casing surface of the cylinder part (10) and is arranged in such a way that, when the driver disc (9) is rotating, it runs along the circulatory track and alternately wipes the second and the third contact track (53a, 31).

6. Drive apparatus according to Claim 4,
**characterized**
- **in that** the first contact track (31b) is formed on an inner casing surface of the contact sleeve (8), in a manner annularly closed about its axis,
- **in that** the second and the third contact track (53a, 31) are formed on an inner casing surface of the contact sleeve (8), in a manner axially offset with respect to the first contact track (31b) and running around the axis of the contact sleeve (8), in the form of an annular circulatory track which is interrupted only by mutual isolation means (16),
- **in that** the first contact lug (13), which is assigned to the first contact track (31b), is formed on the casing surface of the cylinder part (10) and is arranged in such a way that, when the driver disc (9) is rotating, it runs along the annularly closed first contact track (31b) and in the process continuously wipes the first contact track (31b),
- and **in that** the second contact lug (14), which is assigned to the second and the third contact track (53a, 31), is formed on the casing surface of the cylinder part (10) and is arranged in such a way that, when the driver disc (9) is rotating, it runs along the circulatory track and alternately wipes the second and the third contact track (53a, 31).

7. Drive apparatus according to Claim 3,
**characterized**
- **in that** the second and the third contact track (53a, 31) are in the form of a circulatory track which is arranged on the open edge (8a) of the contact sleeve (8) in an annular manner and is interrupted only by mutual isolation means (16),
- and **in that** the second contact lug (14), which is associated with the second and the third contact track (53a, 31), extends from the surface of the driver disc (9) to the edge region (8b) of the contact sleeve (8) in the axial direction to such an extent that, when the driver disc (9) is rotating, it runs along the circulatory track and alternately wipes the second and the third contact track (53a, 31).

8. Drive apparatus according to one of Claims 2 to 5 or according to Claim 7,
**characterized in that** the first contact track (31b) is formed on the inner end face of the contact sleeve (8) and the associated first contact lug (13) is formed on the top surface of the cylinder part (10).

9. Drive apparatus according to Claim 8,
**characterized in that** the first contact lug (13) is formed on the top surface of the cylinder part (10) in a flat manner and makes contact with the first contact track (31b) by means of an intermediate, flat contact spring (15).

10. Drive apparatus according to one of Claims 1 to 8,
**characterized in that** the first and/or second contact lugs or lug (13, 14) comprise/comprises a spring contact element (17) with a pointed end (18) which makes direct contact with the associated contact track (31b, 53a, 31).

## Revendications

1. Dispositif d'entraînement d'un essuie-glace comportant un pignon entraîné (6), un couvercle de boîtier de transmission (4) sur lequel est formé un manchon ouvert, en matière plastique, du côté du pignon entraîné (6) ainsi qu'un commutateur de position de rangement formé de premiers contacts montés à rotation et de seconds contacts solidaires du couvercle (4) et assurant un contact de glissement, les contacts montés à rotation étant reliés au pignon entraîné (6) par un dispositif d'entraînement,
dans lequel
- le manchon est en forme de manchon de contact (8) servant à la mise en contact des contacts rotatifs et qui comporte des chemins de contact (31b, 53a, 31), et
- l'installation d'entraînement comporte un disque d'entraînement (9) muni d'une partie de cylindre (10) centrale et de pattes de contact (13, 14),
- la partie de cylindre (10) pénétrant dans le manchon de contact (8) de façon que les pattes de contact (13, 14) du disque de contact (9) solidaires en rotation du pignon denté de sortie (6), soient appliquées en glissement contre les chemins de contact (31b, 53a, 31) du manchon de contact,
**caractérisé en ce qu'**
- au moins l'une des pattes de contact (31b, 53a, 31) est prévue sur la surface intérieure du manchon de contact (8) et
- au moins l'une des pattes de contact (13, 14) est réalisée à la surface de la partie cylindrique (10).

2. Dispositif d'entraînement selon la revendication 1,
**caractérisé en ce que**
le manchon de contact (8) comporte trois chemins de contact (31b, 53a, 31) et le disque d'entraînement (9) comporte deux pattes de contact (13, 14) reliées électriquement, réalisées et disposées de façon que lorsque le disque de contact (9) tourne, une première patte de contact (13) glisse en permanence sur un premier chemin de contact (31 b) et une seconde patte de contact (14) glisse en alternance sur un second et un troisième chemin de contact (53a, 31) du manchon de contact (8).

3. Dispositif d'entraînement selon la revendication 2,
**caractérisé en ce que**
le second et le troisième chemin de contact (53a, 31) sont réalisés sous la forme de segments d'un chemin de circulation annulaire interrompu seulement par des isolations réciproques (16), chemin le long duquel la seconde patte de contact (14) tourne en glissement et vient alternativement en contact avec le second et le troisième chemin de contact (53a, 31).

4. Dispositif d'entraînement selon les revendications 2 ou 3,
**caractérisé en ce que**
tous les trois chemins de contact (31b, 53a, 31) sont prévus sur la surface intérieure du manchon de contact (8), et
les deux pattes de contact (13, 14) sont réalisées à la surface de la partie de cylindre (10).

5. Dispositif d'entraînement selon la revendication 4,
**caractérisé en ce que**
- le second et le troisième chemin de contact (53a, 31) sont réalisés sur la surface-enveloppe intérieure du manchon de contact (8) en tournant autour de son axe, sous la forme d'un chemin de circulation annulaire interrompu seulement par des isolations réciproques (16), et
- la seconde patte de contact (14) associée au second et au troisième chemin de contact (53a, 31) est réalisée sur la surface-enveloppe de la partie cylindrique (10) en étant disposée de façon à tourner le long du chemin de circulation lorsque le disque d'entraînement (9) tourne, et à glisser en alternance sur le second et le troisième chemin de contact (53a, 31).

6. Dispositif d'entraînement selon la revendication 4,
**caractérisé en ce que**
- le premier chemin de contact (31b) est réalisé sur la surface-enveloppe intérieure du manchon de contact (8), en formant un anneau fermé autour de l'axe,
- le second et le troisième chemin de contact (53a, 31) sont décalés axialement sur la surface-enveloppe intérieure du manchon de contact (8) par rapport au premier chemin de contact (31 b) en tournant autour de l'axe du manchon de contact (8) sous la forme d'un chemin de circulation annulaire interrompu seulement par les isolations réciproques (16),
- la première patte de contact (13) associée au premier chemin de contact (31b) est réalisée sur la surface-enveloppe de la partie cylindrique (10) et disposée de façon que lorsque le disque d'entraînement (9) tourne, elle circule le long du premier chemin de contact (31b) annulaire, fermé, et glisse ainsi en permanence sur le premier chemin de contact (31b), et
- la seconde patte de contact (14) associée au second et au troisième chemin de contact (53a, 31) est réalisée sur la surface-enveloppe de la partie cylindrique (10) et est disposée de façon que lorsque le disque d'entraînement (9) tourne, elle circule le long du chemin de circulation et glisse alternativement sur le second et le troisième chemin de contact (53a, 31).

7. Dispositif d'entraînement selon la revendication 3,
**caractérisé en ce que**
- le second et le troisième chemin de contact (53a, 31) sont réalisés sous la forme d'un chemin de circulation, annulaire, prévu sur le bord ouvert (8a) du manchon de contact (8) en étant interrompu seulement par des isolations réciproques (16), et
- les secondes pattes de contact (14) associées au second et troisième chemin de contact (53a, 31) s'étendent à partir de la surface du disque d'entraînement (9) dans la direction axiale, vers la zone marginale (8b) du manchon de contact (8) de façon à tourner le long du chemin de circulation lorsque le disque d'entraînement (9) tourne et à glisser alternativement sur le second et le troisième chemin de contact (53a, 31).

8. Dispositif d'entraînement selon l'une des revendications 2 à 5 ou la revendication 7,
**caractérisé en ce que**
le premier chemin de contact (31b) est réalisé sur la surface frontale intérieure du manchon de contact (8) et la première patte de contact (13) correspondante est réalisée sur la surface de couverture dé la partie cylindrique (10).

9. Dispositif d'entraînement selon la revendication 8,
**caractérisé en ce que**
la première patte de contact (13) est réalisée à plat sur la surface de couverture de la partie cylindrique (10) et est reliée au premier chemin de contact (31b) par l'intermédiaire d'un ressort de contact (15), plat, interposé.

10. Dispositif d'entraînement selon l'une des revendications 1 à 8,
**caractérisé en ce que**
la première et/ou la seconde patte de contact (13, 14) comportent un élément de contact élastique (17) avec une extrémité ponctuelle (18) qui touche directement le chemin de contact correspondant (31b, 53a, 31).
